Europäisches Patentamt

European Patent Office

Office européen des brevets

(19)

(11) Veröffentlichungsnummer: **0 249 071**
**B1**

(12)

# EUROPÄISCHE PATENTSCHRIFT

(45) Veröffentlichungstag der Patentschrift:
**19.07.89**

(51) Int. Cl.⁴: **B60R 11/02**

(21) Anmeldenummer: **87107400.1**

(22) Anmeldetag: **21.05.87**

(54) **Diebstahlsicherung für ein in einem Einbauschacht eines Kraftfahrzeuges eingebautes Phonogerät.**

(30) Priorität: **10.06.86 DE 3619523**

(43) Veröffentlichungstag der Anmeldung:
**16.12.87 Patentblatt 87/51**

(45) Bekanntmachung des Hinweises auf die Patenterteilung:
**19.07.89 Patentblatt 89/29**

(84) Benannte Vertragsstaaten:
**ES FR GB IT NL SE**

(56) Entgegenhaltungen:
**EP-A- 0 182 991**
**US-A- 4 113 217**

(73) Patentinhaber: **Daimler-Benz Aktiengesellschaft,**
**Postfach 600202 Mercedesstrasse 136,**
**D-7000 Stuttgart 60(DE)**

(72) Erfinder: **Polic, Marko, Sommerhofenstrasse 104/1,**
**D-7032 Sindelfingen(DE)**
Erfinder: **Kneib, Rudi, Auf der Stelle 25,**
**D-7032 Sindelfingen(DE)**
Erfinder: **Robitschko, Peter, Kleines Egart 7,**
**D-7032 Sindelfingen 6(DE)**

## Beschreibung

Die Erfindung betrifft eine Diebstahlsicherung gemäß dem Oberbegriff des Anspruches 1.

Bei einer gattungsgemäßen Diebstahlsicherung (Fahrzeuge Mercedes-Benz Typ 124, 126 ... mit eingebautem Radio) ist am Einbauschacht und in der Schachtöffnung liegend eine Formfeder aus Flachbandmaterial als Kontaktelement angeordnet, welche im Einbauzustand des Radios dessen mit Masse verbundenes Gehäuse kontaktiert. Auf die Formfeder ist ein Kabelsatz aufgesteckt, von welchem ein Kabel zu einer im Fahrzeug angeordneten Einbruch-Diebstahl-Warnanlage (EDW-Anlage) und ein Kabel über eine Steckverbindung am Radio zu einem Eingang des Diebmoduls führt.

Gegenüber dieser bekannten Ausführung besteht die Aufgabe der Erfindung darin, die Diebstahlsicherung so auszubilden, daß die Fehlfunktionssicherheit sowohl während des Fahrbetriebes als auch bei befugten Montage- und Servicearbeiten noch weiter erhöht wird.

Diese Aufgabe wird erfindungsgemäß mit den kennzeichnenden Merkmalen des Anspruches 1 gelöst.

Vorteilhafte Ausgestaltungen undWeiterbildungen des Erfindungsgegenstandes sind durch die Merkmale der Unteransprüche gekennzeichnet.

Ein Ausführungsbeispiel der Erfindung ist in der Zeichnung dargestellt und wird im folgenden näher beschrieben. Es zeigen

Fig. 1 in schematischer Darstellung ein im Einbauschacht einer Instrumententafel eines Kraftfahrzeuges eingebautes Radio mit Diebstahlsicherung,

Fig. 2 eine alternative schaltungstechnische Ausführungsform,

Fig. 3 ein als Druckschalter ausgebildetes Kontaktelement.

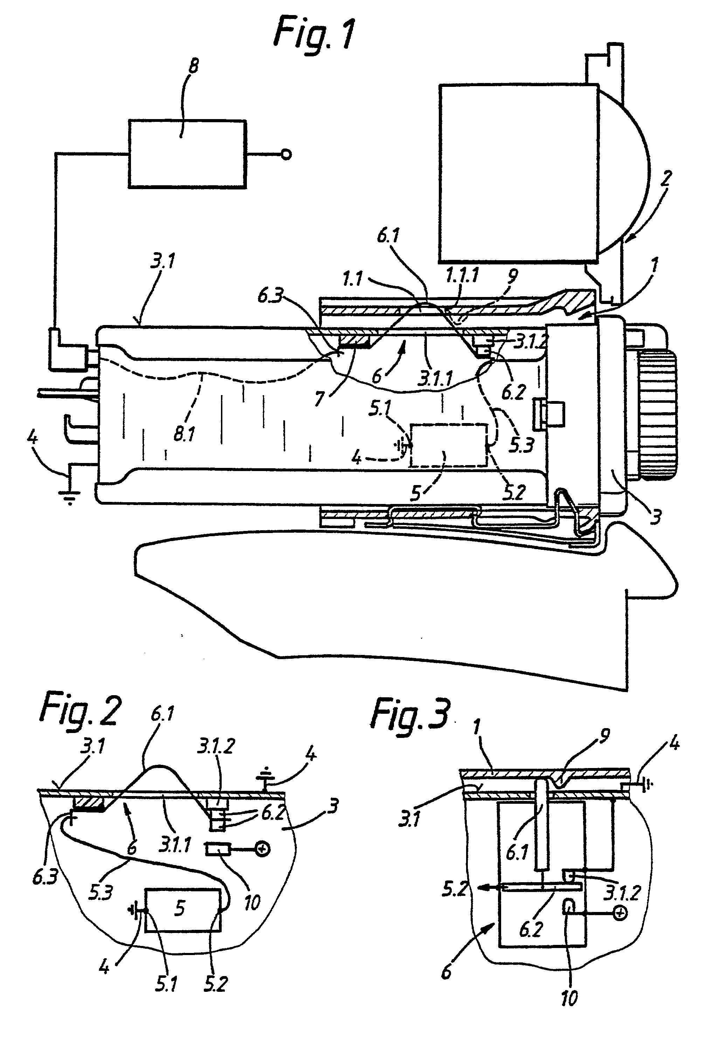

Wie Fig. 1 zeigt, ist im Einbauschacht 1 einer Instrumententafel 2 eines Kraftfahrzeuges ein Radio 3 eingebaut. Das Gehäuse 3.1 des Radios ist mit Masse 4 verbunden, ebenso ein Eingang 5.1 eines im Radio eingebauten Diebmoduls 5. Des weiteren ist im Radio ein Kontaktelement 6 angeordnet, welches als Blattfeder - vorzugsweise mit einer Isolierung versehen - ausgebildet ist. Das Kontaktelement 6 ist einerseits über eine Isolierscheibe 7 an der Gehäuseinnenseite befestigt und erstreckt sich mit einer als Betätigungsteil 6.1 dienenden V-förmigen Auswölbung durch einen Gehäusedurchbruch 3.1.1. derart, daß die Spitze der Auswölbung in eine rechteckförmige Ausnehmung 1.1 des Einbauschachtes 1 eingreifen kann, deren Abmessung so dimensioniert ist, daß die Wandung 1.1.1 der Ausnehmung 1.1 gegenüber dem Betätigungsteil 6.1 als Kulisse dient. Am anderen Ende des Kontaktelementes 6 trägt dasselbe einen Kontakt 6.2, welcher unter der Vorspannung des Kontaktelementes 6 auf einem gehäuseinnenseitigen Massekontakt 3.1.2 aufliegt. Der Kontakt 6.2 wiederum ist über eine elektrische Verbindung 5.3 mit dem anderen Eingang 5.2 des Diebmoduls 5 verbunden, während an das andere Ende des Kontaktelementes 6 über eine Anschlußfahne 6.3 eine mit einer EDW-Anlage 8 verbundene elektrische Leitung 8.1 angeschlossen ist.

Im eingebauten Zustand des Radios 3 liegt also der Diebmodul 5 sowohl an seinem Eingang 5.1 als auch an seinem Eingang 5.2 über die Verbindung 5.3, die Kontakte 6.2 und 3.1.2. an Masse 4. Ebenso liegt auch die EDW-Anlage 8 über die Verbindung 8.1 and Masse 4. Hat nun beim Verlassen des Fahrzeuges der Fahrer die EDW-Anlage 8 scharf geschaltet und versucht nun ein Unbefugter das Radio 3 zu entwenden, so läuft beim Herausziehen des Radios 3 aus dem Einbauschacht 1 das Betätigungsteil 6.1 an der Wandung 1.1.1 auf, wodurch dasselbe in Richtung Gehäuseinneres bewegt wird. Dabei hebt der Kontakt 6.2 vom Massekontakt 3.1.2 ab und unterbricht die Masseverbindung zum Gehäuse 3.1 und somit auch den Masseanschluß der EDW-Anlage 8. Die EDW-Anlage 8 löst dadurch einerseits Alarm aus und andererseits legt sie durch einen internen Schaltvorgang an die Leitung 8.1 Plus-Potential an, welches über das Kontaktelement 6 und die Verbindung 5.3 auch an den Eingang 5.2 des Diebmoduls 5 gelangt. Durch den Potantialwechsel am Eingang 5.2 von Masse auf Plus wird der Diebmodul 5 aktiviert, welcher das Radio funktionsunfähig schaltet, also für den Unbefugten wertlos macht. Lediglich Befugte können durch geeignete Maßnahmen das Radio wieder funktionsfähig schalten.

Alternativ ist in Fig. 1 noch dargestellt, daß die Kulisse für das Betätigungsteil 6.1 auch als Nocken 9 ausgebildet sein kann.

Während in Fig. 1 in die Diebstahlsicherung eine EDW-Anlage einbezogen ist, zeigt Fig. 2 in teilweiser Darstellung eine Anordnung ohne EDW-Anlage. Im Unterschied zu Fig. 1 ist hierbei die Verbindung 5.3 nunmehr an der Anschlußfahne 6.3 des Kontaktelementes 6 befestigt, so daß der Eingang 5.2 des Diebmoduls 5 über die Verbindung 5.3, das Kontaktelement 6 und die Kontakte 6.2 und 3.1.2 an Masse 4 liegt. Zusätzlich ist ein weiterer, Plus-Potential führender Kontakt 10 im Gehäuse 3.1 vorgesehen, auf welchen der Kontakt 6.2 gelegt wird, wenn das Radio unbefugt entwendet wird. Dadurch gelangt wiederum Plus-Potential an den Eingang 5.2 des Diebmoduls 5, wodurch dieser aktiviert wird.

Obwohl in den Figuren das Kontaktelement als Federelement dargestellt ist, könnte dasselbe - wie in Fig. 3 dargestellt - auch als Druckschalter mit einem Stößel als Betätigungsteil ausgebildet sein.

## Patentansprüche

1. Diebstahlsicherung für ein in einem Einbauschacht eines Kraftfahrzeuges eingebautes Phonogerät, dessen Gehäuse elektrisch mit Masse verbunden ist und in welches ein Diebmodul integriert ist, dessen einer Eingang mit Masse und dessen anderer Eingang im eingebauten Zustand des Phonogerätes über einen Kontakt eines Kontaktelementes mit dem an Masse liegenden Gehäuse verbunden ist, beim unbefugten Ausbau des Phonogerätes und damit einhergehender Unterbrechung der Masseverbindung zwischen dem Kontakt und dem Gehäuse jedoch mit Plus-Potential zur Aktivierung des Diebmoduls verbunden wird, **dadurch gekennzeichnet,** daß das Kontaktelement (6) mit seinem Kontakt (6.2) innerhalb des Gehäuses (3.1) angeordnet ist und aus diesem lediglich ein Betätigungsteil (6.1) des Kontaktelementes (6) herausragt, welches im eingebauten Zustand des Phonogerätes (3) eine in dem Spalt zwischen Gehäuse (3.1) und Einbauschacht (1) und an letzterem angeordnete Kulisse (1.1.1;9) hintergreift, mittels welcher über das Betätigungsteil (6.1) beim Ausbau des Phonogerätes (3) die Masseverbindung des Kontaktes (6.2) zum Gehäuse (3.1) unterbrochen wird.

2. Diebstahlsicherung nach Anspruch 1,
**dadurch gekennzeichnet,**
daß das Kontaktelement (6) als Blattfeder mit einer aus dem Gehäuse (3.1) herausragenden V-förmigen Auswölbung als Betätigungsteil (6.1) ausgebildet ist und das eine Ende der Blattfeder gegenüber dem Gehäuse (3.1) isoliert (7) an diesem befestigt ist und das andere Ende der Blattfeder den Kontakt (6.2) trägt.

3. Diebstahlsicherung nach Anspruch 2,
**dadurch gekennzeichnet,**
daß die Blattfeder in Richtung der mit dem Betätigungsteil (6.1) korrespondierenden Kulisse (1.1.1;9) vorgespannt ist.

4. Diebstahlsicherung nach Anspruch 2,
**dadurch gekennzeichnet,**
daß mindestens ein Ende der Blattfeder zugleich als Anschlußfahne (6.3) ausgebildet ist.

5. Diebstahlsicherung nach Anspruch 1 und 2,
**dadurch gekennzeichnet,**
daß das Betätigungsteil (6.1) in eine rechteckförmige Ausnehmung (1.1) des Einbauschachtes (1) eingreift, wobei eine Wandung der Ausnehmung (1.1) die Kulisse (1.1.1) bildet.

6. Diebstahlsicherung nach Anspruch 1,
**dadurch gekennzeichnet,**
daß die Kulisse (9) als in dem Spalt zwischen dem Gehäuse (3.1) und der Wandung des Einbauschachtes (1) an derselben angeordneter Nocken ausgebildet ist.

7. Diebstahlsicherung nach Anspruch 1 und 2,
**dadurch gekennzeichnet,**
daß das eine Ende der Blattfeder noch über eine elektrische Leitung (8.1) mit einer Einbruch-Diebstahl-Warnanlage (8) verbunden ist.

8. Diebstahlsicherung nach Anspruch 1,
**dadurch gekennzeichnet,**
daß das Kontaktelement (6) als Druckschalter mit einem Stößel als Betätigungsteil ausgebildet ist (Fig. 3).

**Revendications**

1. Dispositif anti-vol pour un auto-radio monté dans un boîtier d'encastrement d'un véhicule automobile, auto-radio dont le carter est relié électriquement à la masse et dans lequel est intégré un module antivol dont la première entrée à la masse et dont la seconde entrée est reliée, dans la condition de montage de l'auto-radio, par l'intermédiaire d'un contact d'un élément de contact, au carter mis à la masse alors que, lors d'une sortie non autorisée de l'auto-radio, et par conséquent lors d'une interruption provoquée de la liaison de masse entre le contact et le carter, elle est soumise à un potentiel positif pour une activation du module anti-vol, caractérisé en ce que l'élément de contact (6) est disposé par son contact (6.2) à l'intérieur du carter (3.1) et de ce dernier fait seulement saillie une partie d'actionnement (6.1) de l'élément de contact (6), laquelle, dans la condition de montage de l'auto-radio (3), s'accroche en arrière d'une coulisse (1.1.1; 9), disposée dans l'intervalle entre le carter (3.1) et le boîtier d'encastrement (1) et sur ce dernier, coulisse à l'aide de laquelle la liaison de masse du contact (6.2) avec le carter (3.1) est interrompue par l'intermédiaire de la partie d'actionnement (6.1) lors de l'extraction de l'auto-radio (3).

2. Dispositif anti-vol selon la revendication 1, caractérisé en ce que l'élément de contact (6) est agencé comme une lame élastique comportant une partie bombée en forme de V, servant de partie d'actionnement (6.1) et faisant saillie du carter (3.1) et en ce qu'une première extrémité de la lame élastique est fixée sur le carter (3.1) en étant isolée (7) par rapport à celui-ci tandis que la seconde extrémité de la lame élastique porte le contact (6.2).

3. Dispositif anti-vol selon la revendication 2, caractérisé en ce que la lame élastique est précontrainte en direction de la coulisse (1.1.1; 9) correspondant à la partie d'actionnement (6.1).

4. Dispositif anti-vol selon la revendication 2, caractérisé en ce qu'au moins une extrémité de la lame élastique est agencée simultanément comme une fiche de connexion (6.3).

5. Dispositif anti-vol selon les revendications 1 et 2, caractérisé en ce que la partie d'actionnement (6.1) s'accroche dans un évidement (1.1) de forme rectangulaire du boîtier d'encastrement (1), une paroi de l'évidement (1.1) formant la coulisse (1.1.1).

6. Dispositif anti-vol selon la revendication 1, caractérisé en ce que la coulisse (9) agencée comme une came disposée dans l'intervalle entre le carter (3.1) et la paroi du boîtier d'encastrement (1), en étant disposée sur cette paroi.

7. Dispositif anti-vol selon les revendications 1 et 2, caractérisé en ce que la première extrémité de la lame élastique est en outre reliée, par l'intermédiaire d'un conducteur électrique (8.1), à une installation d'avertissement de vol par effraction (8).

8. Dispositif anti-vol selon la revendication 1, caractérisé en ce que l'élement de contact (6) est agencé comme un interrupteur sensible à la pression, pourvu d'un poussoir servant de partie d'actionnement (Figure 3).

**Claims**

1. Anti-theft device for an audio system which is built into a mounting shaft in a motor vehicle and the housing of which is electrically connected to earth and in which an intruder module is integrated, one input of which module has an earth connection and the other input of which is connected to the earthed housing via a contact of a contact element with the audio system in an installed state, but is connected to the positive potential to activate the intruder module in the event of unauthorized removal of the audio system and thus continuous interruption of the earth connection between the contact and the housing, characterised in that the contact element (6) is arranged with its contact (6.2) inside the housing (3.1) and only an actuating component (6.1) of the contact element (6) projects out of this housing, which actuating component engages behind a rocker (1.1.1;9) arranged in the gap between the housing (3.1) and mounting shaft (1) and on the latter, with the aid of which rocker the earth connection between the contact (6.2) and the housing (3.1) is broken by way of the actuating component (6.1) in the event of removal of the audio system (3).

2. Anti-theft device according to Claim 1, characterised in that the contact element (6) ist in the form of a leaf spring having a V-shaped recess projecting out of the housing (3.1) as an actuating component (6.1) and one end of the leaf spring is provided with insulation (7) relative to the housing (3.1) and mounted thereon and the other end of the leaf spring bears the contact (6.2).

3. Anti-theft device according to Claim 2, characterised in that the leaf spring is pretensioned in the direction of the rocker (1.1.1; 9) corresponding to the actuating component (6.1).

4. Anti-theft device according to Claim 2, characterised in that at least one end of the leaf spring is at the same time designed in the form of a connecting lug (6.3).

5. Anti-theft device according to Claims 1 and 2, characterised in that the actuating component (6.1) engages in a rectangular recess (1.1) in the mounting shaft (1), a wall of the recess (1.1) forming the rocker (1.1.1).

6. Anti-theft device according to Claim 1, characterised in that the rocker (9) is in the form of a cam which is arranged in the gap between the housing (3.1) and the wall of the mounting shaft (1) on the said wall.

7. Anti-theft device according to Claim 1 and 2, characterised in that one end of the leaf spring is also connected to an intruder alarm system (8) via an electric lead (8.1).

8. Anti-theft device according to Claim 1, characterised in that the contact element (6) is in the form of a press switch with a plunger as the actuating portion (Fig. 3).

EP 0 249 071 B1

# Fig.1

# Fig.2

# Fig.3